(19) Europäisches Patentamt / European Patent Office / Office européen des brevets

(11) EP 1 803 774 B1

(12) **EUROPEAN PATENT SPECIFICATION**

(45) Date of publication and mention of the grant of the patent:
**01.06.2011 Bulletin 2011/22**

(21) Application number: **05783280.0**

(22) Date of filing: **15.09.2005**

(51) Int Cl.:
***C08L 67/00*** *(2006.01)* ***C08K 3/34*** *(2006.01)*
***C08K 9/04*** *(2006.01)* ***C08L 101/16*** *(2006.01)*

(86) International application number:
**PCT/JP2005/017042**

(87) International publication number:
**WO 2006/030859 (23.03.2006 Gazette 2006/12)**

(54) **ALIPHATIC POLYESTER RESIN COMPOSITION HAVING EXCELLENT HEAT RESISTANCE**

ZUSAMMENSETZUNG AUF BASIS VON ALIPHATISCHEM POLYESTERHARZ MIT HERVORRAGENDER WÄRMEBESTÄNDIGKEIT

COMPOSITION DE RESINE POLYESTER ALIPHATIQUE AYANT UNE EXCELLENTE RESISTANCE A LA CHALEUR

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.09.2004 JP 2004269987**

(43) Date of publication of application:
**04.07.2007 Bulletin 2007/27**

(73) Proprietor: **Asahi Kasei Life & Living Corporation**
**Tokyo, 100-8440 (JP)**

(72) Inventors:
- **MIYAMOTO, Ikuya**
  **Mie 5130828 (JP)**
- **KASHIWAGI, Yoshiyuki**
  **Mie 513-0806 (JP)**

(74) Representative: **Strehl Schübel-Hopf & Partner**
**Maximilianstrasse 54**
**80538 München (DE)**

(56) References cited:
**EP-A- 0 516 075** **WO-A-99/54393**
**DE-A1- 3 806 548** **DE-A1- 19 927 652**
**JP-A- 2003 147 182** **JP-A- 2004 189 863**
**JP-A- 2004 250 697** **JP-A- 2005 002 174**
**US-A- 5 126 013**

- **DATABASE WPI Week 200424 Thomson Scientific, London, GB; AN 2004-249993 XP002569244 & JP 2003 313404 A (MITSUI CHEM INC) 6 November 2003 (2003-11-06)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to an aliphatic polyester resin composition having a superior crystallization rate.

BACKGROUND ART

Recently, from the viewpoint of environmental conservation, attention has been given to biodegradable aliphatic polyester resins which are decomposed by microorganisms in soil or water. The utility increases particularly in the fields of transportation equipment such as automobiles, food packaging, and agricultural materials.
Among these aliphatic polyester resins, polylactic acid has the greatest utility because it can be produced from renewable plant resources such as corn, can be mass-produced, consequently has a low cost, and can be formed in a melted state. However, polylactic acid actually resembles an amorphous resin in behavior because the crystallization rate of polylactic acid is remarkably lower than that of non-biodegradable common plastic such as polyethylene, polypropylene and polyethyleneterephthalate. Specifically, the polylactic acid is sharply and extremely softened in the vicinity of a glass transition temperature, and accordingly has been hardly acquire sufficient characteristics of heat resistance, moldability (processability), mold releasability and impact strength.
As for a method for increasing the crystallization rate of these aliphatic polyester resins represented by polylactic acid, a method of adding inorganic fillers such as talc, mica and glass fiber has been conventionally reported, but the method had a problem of having a lowered transparency of the resin itself and high specific gravity, because it needs to contain an abundance of the inorganic fillers to develop the effect. For this reason, for the purpose of solving these problems, JP-A-6-299054 (Patent Document 1) discloses a technology of preventing blocking and imparting moldability (processability) by adding bisamide of higher fatty acid to polylactic acid; JP-A-8-27363 (Patent Document 2) discloses a technology of imparting mold releasability and.molding processability by adding fatty acid amide to a thermoplastic polymer composition containing polylactic acid as the main component; and JP-A-2003-73538 (Patent Document 3) discloses a technology of providing a biodegradable resin composite having a superior modulus of elasticity and crystallization rate by adding a layered clay mineral modified with an organic onium salt having a hydroxyl group; to a biodegradable resin. In addition, JP-A-2003-128900 (Patent Document 4) discloses that car components and home electrical components made from a resin composition containing a lactic-acid-based resin, an aliphatic (or aromatic) polyester with Tg of 0 degree or lower, an inorganic filler and a hydrolysis inhibitor show superior physical properties and recycability. In addition, WO04/099315 (Patent Document 5) shows that a composition containing a biodegradable polyester resin, a methacrylic acid ester compound and layered silicate is superior in heat resistance, mechanical strength and suitability for foaming processing. In addition, JP-A-2004-51666 (Patent Document 6) shows that a composition containing polylactic acid, layered silicate modified with organic onium salt, an amide compound and talc has a high crystallization rate and a high heat resisting temperature of a formed article.
However, though the above described prior arts improve a crystallization rate to a certain extent, the effect was not yet adequate, and consequently had a problem that the resin needs to take a remarkably long period of forming time or be heat-treated after having been formed in order to obtain a formed article having adequate crystallinity. It remarkably decreases productivity to take the long period of forming time, and accordingly becomes an industrially capital disadvantage. On the other hand, the method of heat-treating an article after having been formed has a problem of deforming the formed article during the heat treatment, and accordingly is not practically used.
(Patent Document 1) JP-A-6-299054
(Patent Document 2) JP-A-8-27363
(Patent Document 3) JP-A-2003-73538
(Patent Document 4) JP-A-2003-128900
(Patent Document 5) WO04/099315
(Patent Document 6) JP-A-2004-51666.

DISCLOSURE OF THE INVENTION

[Problems to be Solved by the Invention]

An object of the present invention is to provide an aliphatic polyester resin composition having a superior crystallization rate.

[Means for Solving the Problems]

As a result of having repeated an extensive research for the purpose of solving the above described problems, the present inventors found that an aliphatic polyester resin composition containing four components which will be described below had a superior crystallization rate, and consequently can be formed into an article having very high heat resistance in a short period of forming time, and accomplished the present invention. The present inventors also found that the composition further containing an end-capping agent of carboxyl terminal group imparts to the formed article not only superior heat resistance, impact strength and durability but also improved processing stability.

1. Aliphatic polyester
2. Organic layered silicate obtained by treating layered silicate with an organic onium salt
3. Talc
4. Nonionic surfactant

Specifically, the present invention is as described below.

(1) An aliphatic polyester resin composition comprising:

- an aliphatic polyester,
- an organic layered silicate obtained by treating a layered silicate with an organic onium salt,
- talc, and
- a nonionic surfactant.

(2) The aliphatic polyester resin composition according to the item (1), comprising 0.05 to 10 wt% of the organic layered silicate, 0.05 to 30 wt% of the talc and 0.05 to 20 wt% of the nonionic surfactant with respect to 40.0 to 99.85 wt% of the aliphatic polyester.
(3) The aliphatic polyester resin composition according to the item (1), wherein the organic onium salt has a polar group.
(4) The aliphatic polyester resin composition according to the item (3), wherein the polar group is a hydroxyl group.
(5) The aliphatic polyester resin composition according to the item (1), wherein the nonionic surfactant is at least one compound selected from the group consisting of a polyoxyethylene alkyl ether, a polyoxyethylene glycol fatty acid diester, a polyoxyethylene sorbitan fatty acid monoester and a polyoxyethylene glyceryl fatty acid ester.
(6) The aliphatic polyester resin composition according to the item (1), wherein the nonionic surfactant is a polyoxyethylene alkyl ether or a polyoxyethylene glycol fatty acid diester.
(7) The aliphatic polyester resin composition according to the item (1), wherein the nonionic surfactant is a polyoxyethylene alkyl ether.
(8) The aliphatic polyester resin composition according to the item (1), wherein the aliphatic polyester is polylactic acid.
(9) The aliphatic polyester resin composition according to the item (1), further comprising an end-capping agent of a carboxyl terminal group of the aliphatic polyester.
(10) A formed article obtained by forming the aliphatic polyester resin composition according to any one of items (1) to (9).

[Effects of the Invention]

The aliphatic polyester resin composition of the present invention has a high crystallization rate, and accordingly can produce a formed article having superior heat resistance in a short period of forming time.

BEST MODE FOR CARRYING OUT THE INVENTION

The present invention will be now described in detail particularly and mainly on preferred embodiments below. A layered silicate of the present invention includes a clay mineral such as pyrophyllite, smectite, vermiculite and mica, which may be produced by refining naturally existing substances or be synthesized with a well-known method such as a hydrothermal method. Specific examples of the layered silicate used in the present invention include montmorillonite, hectorite, beidellite, saponite and synthetic fluorinated mica. For instance, examples of montmorillonite include CloisiteNa (trade name) produced by Southern Clay Company and KunipiaRG (trade name) produced by Kunimine Kogyo Corporation, and an example of synthetic fluorinated mica includes SomasifME100 (trade name) produced by Co-op Chemical Co., Ltd.
An organic layered silicate of the present invention is produced by organically modifying a layered silicate

through exchanging a cation existing between the layers of the layered silicate to an organic onium salt.
The organic onium salt of the present invention is produced by making a coordinate bond between an organic component and a Lewis base and corresponds to a fourth grade ammonium salt, an organic phosphonium salt and an organic sulphonium salt. The organic onium salt also includes an organic amine compound presenting cationic properties when dissolved in an acid polar solvent and a zwitterion compound, and the fourth grade ammonium salt as shown in the following formula (1) or the organic amine compound made to be cationic is preferably used.

[Chemical formula 1]

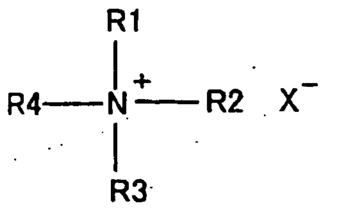

(1)

In the above formula, R1, R2, R3 and R4 are each hydrogen or a saturated or unsaturated hydrocarbon group represented by a methyl group, an ethyl group, a lauryl group, a cetyl group, an oleyl group, an isostearyl group and a stearyl group. The hydrocarbon may have a straight chain or a branch structure, or may be epoxidized. In addition, the hydrocarbon chain may be derived from natural products represented by beef tallow and coconut oil; and may have a cycloalkane, an aromatic ring or an ester structure, or have a carboxyl group such as betaine. In addition, at least one group among hydrocarbon chains of R1 to R4 preferably has a carbon number of 10 or more. When the number of carbon composing the longest hydrocarbon chain is less than 10, affinity between an organic silicate and an aliphatic polyester is insufficient and may not adequately improve the physical properties. X shows an anion, and includes mainly an halide ion such as a chloride ion or a bromide ion, though it is not particularly limited to them.

A polar group of the present invention means a functional group having a polarity, such as a hydroxyl group, a carboxyl group, a carboxyl derivative, a carboxylic anhydride, a nitro group and an imido group. Among them, a group having a hydroxyl group is preferable. Detailed description will be now provided below.
The hydroxyl group may exist in a form of a hydroxyalkylene group and a polyoxyalkylene group. A position of a hydroxyl group in an organic onium salt of the present invention is not limited in particular, but when an ammonium salt or an amine is employed as the organic onium salt, salts having a hydroxyl group coupled to the vicinity of a nitrogen atom are preferably used. The examples include hydrogenated tallow diethanolamine and dodecyldiethanolamine, methyloctadecyldihydroxyethylammonium chloride and methyldodecyldihydroxypropylammonium chloride. In addition, the examples of organic ammonium compounds containing a polyoxyalkylene group include polyoxyethyleneoctadecyldimethylammonium chloride and methyldipolyoxypropyleneoctadecylammonium chloride. The organic ammonium compound having any added mole numbers of the polyoxyalkylene group can be used.
One example of the organic amine or organic onium salt having the above structure includes Blaunon S-202, Blaunon S-204, Blaunon S-205T and Blaunon L-202 (trade names) produced by Aoki Oil Industrial Co., Ltd.; Ethomeen C/12, Ethomeen HT/12, Ethomeen 18/12 Ethoquad C/25, Ethoquad C/12 and Ethoquad (trade names) produced by Lion Akzo Co., Ltd.; and Amphitol 20BS, Amphitol 24B and Amphitol 86B (trade names) produced by Kao Corporation.

In the present invention, a method for synthesizing an organic layered silicate is not limited in particular, and a well-known technique can be used. For instance, when using an organic onium salt, the layered silicate can be modified by the following steps of: dispersing the powder of the layered silicate in water with the use of a mixer or the like, to obtain the water dispersion of a layered clay mineral; as an aside, preparing an aqueous solution of the organic onium salt; adding the aqueous solution to the water dispersion of the above described layered clay mineral, to exchange inorganic ions in the layered clay mineral to the organic onium ions produced from the organic onium salt; and removing water from the mixture, to obtain the organic layered clay mineral. As a dispersion medium for the organic ammonium salt and the layered clay mineral, in addition to water, methanol, ethanol, propanol, isopropanol, ethylene glycol, a mixture thereof, and a mixture of the compound with water can be used. When using an amine compound and a zwitterion compound as an organically modifying agent, they can be used for ion exchange after having been converted to cations by acidifying a hydrophilic solvent with hydrochloric acid, etc.
The specific examples of the organic layered silicate include Cloisite 15A, Cloisite 20A and Cloisite 25A (trade names) produced by Southern Clay Corporation, and Somasif MAE and Somasif MTE (trade names) produced by Co-op Chemical

Co., Ltd. In addition, the specific examples of an organic layered silicate treated with an organic onium salt containing a hydroxyl group include Cloisite 30B (trade name) produced by Southern Clay Corporation and Somasif MEE and Somasif MPE (trade names) produced by Co-op Chemical Co., Ltd.

An aliphatic polyester resin composition containing these organic layered silicates obtained through treatment with the use of the organic onium salt containing the hydroxyl group has an effect of increasing the crystallinity of an aliphatic polyester resin (Template effect) when being crystallization-treated; thereby improves the heat resistance of an obtained formed article; and also has an effect of improving the rigidity (modulus of elasticity) of the formed article because of containing those organic layered silicates.

A nonionic surfactant of the present invention is composed of a hydrophilic portion and a hydrophobic portion. The structure of the hydrophobic portion includes a saturated or unsaturated hydrocarbon group represented by a lauryl group, a cetyl group, an oleyl group, an isostearyl group and a stearyl group, and the hydrocarbon may have a straight chain or a branch structure, or may be epoxidized. In addition, the structure of the hydrophobic portion may be derived from fatty acid refined from natural products represented by beef tallow and coconut oil; and may have a cycloalkane structure such as a rosin and a lanolin, an aromatic structure such as benzene and phenols or an ester structure such as an acrylate and a methacrylate, and a carboxyl group such as betaine, in itself.

The structure of the hydrophilic portion preferably has any one of the structures among a hydroxyl alkylene, a polyoxyalkylene, a carboxyl group, an ester and an amine; and more preferably has the structures of the hydroxyl alkylene and the polyoxyalkylene.

Examples of a nonionic surfactant satisfying such conditions include polyoxyethylene stearyl ether, polyoxyethylene dodecyl ether, polyoxyethylene monolaurate, polyoxyethylene octylphenylether, polyoxyethylene lanolin ether, polyoxyethylene rosin ester, polyoxyethylene stearate, polyoxyethylene glycol fatty acid diester, polyoxyethylene sorbitan fatty acid monoester, polyoxyethylene glyceryl fatty acid diester, octyl hydroxystearate, cholesteryl hydroxystearate, stearyldiethanolamine and dodecyldiethanolamine,etc. Specific examples of the nonionic surfactant having a structure in such a range include Emalex series such as Emalex 602, Emalex 703, Emalex 805, Emalex 1605, Emalex 600di-S and Emalex ET-8020 (trade name) produced by Nihon Emulsion Co., Ltd.

Among these nonionic surfactants, polyoxyethylene alkyl ether, polyoxyethylene glycol fatty acid diester, polyoxyethylene sorbitan fatty acid monoester and polyoxyethylene glyceryl fatty acid ester have a high effect of improving a crystallization rate of the aliphatic polyester resin composition of the present invention.

Among them, polyoxyethylene alkyl ether and polyoxyethylene glycol fatty acid diester are further preferable. The polyoxyethylene alkyl ether and polyoxyethylene glycol fatty acid diester will be now described more in detail. Among polyoxyethylene alkyl ethers, polyoxyethylene alkyl ether with an alkyl group having a carbon chain of C12 to C18 is preferable, and polyoxyethylene stearyl ether with the alkyl group having a carbon chain of C18 is further preferable. Examples of these include Emalex 602, Emalex 610, Emalex 620, Emalex 630 and Emalex 640. A hydrophilic portion is not limited in particular, but the added mole numbers of polyoxyethylene are preferably 2 or more, more preferably 5 or more, and further preferably around 20. Examples of these surfactants include Emalex 620, Emalex 610 and Emalex 602.

As for polyoxyethylene glycol fatty acid diester, it has preferably a fatty acid having a carbon chain of C12 to C18, and a distearic acid polyoxyethylene glycol with a carbon chain of C18 is particularly preferable. In this case, the stearic acid may have an iso structure. A formed article obtained from the aliphatic polyester resin composition containing the diisostearic acid polyoxyethylene glycol has a feature of having not only superior heat resistance but also superior impact strength. An example of these includes Emalex 600di-S.

When selecting a nonionic surfactant of the present invention, an index for improving performance is an intercalation parameter (IP). It is preferable to set a value of the IP to a certain value or higher. The IP value is preferably 13.0 or higher, more preferably 20.0 or higher, and further preferably 25.0 or higher. The value has no upper limit in particular.

The intercalation parameter (IP) is calculated as described below.

$$IP = hf - h0 \qquad (1)$$

hf: interlayer distance in organic layered silicate in a composite of organic layered silicate/nonionic surfactant
h0: interlayer distance in organic layered silicate,
wherein hf and h0 are respectively calculated from the following expressions:

$$h0\ (\text{angstrom}) = d0\ (\text{angstrom}) - 9.5 \qquad (2)$$

$$hf\ (\text{angstrom}) = df\ (\text{angstrom}) - 9.5 \qquad (3),$$

wherein 9.5 A is a thickness of one sheet of a layered silicate and the value is almost constant in any layered silicate to be used. The above value d0 can be calculated by substituting a peak position (2θ) corresponding to reflection at the bottom face of a face 001 in the organic layered silicate into the expression of Bragg, which is obtained from a result of X-ray diffraction measurement on the organic layered silicate of a raw material.

$$d0 = 0.154/2\sin\theta \qquad (4)$$

The above df can be calculated similarly as in the case of d0 from the peak position (2θ) corresponding to the reflection at the bottom face of the face 001 in the organic layered silicate contained in a composite of organic layered silicate/ nonionic surfactant conjugated with the use of the method described below. The peak position (2θ) is obtained from the X-ray diffraction measurement. When calculating the IP, the organic layered silicate and the nonionic surfactant shall be mixed into a ratio of 1/1 (by a weight ratio).

An aliphatic polyester resin composition containing a composite of a nonionic surfactant having a high IP value of the present invention allows the nonionic surfactant to enter between the layers of the organic layered silicate to increase an interlayer distance, and further allows an aliphatic polyester resin to easily enter between the layers when the composite is kneaded with the melted aliphatic polyester resin. This remarkably increases interactions among three components of the aliphatic polyester resin, the organic layered silicate and the nonionic surfactant; and as a result, enhances the plasticization effect and the crystallization rate of the aliphatic polyester resin composition, and consequently improves the heat resistance.

In order to increase an IP value of the present invention, it is necessary to select an appropriate combination of the organic layered silicate and the nonionic surfactant. For instance, it is preferable to use the nonionic surfactant containing a polyoxyethylene chain against the organic layered silicate containing a hydroxyl group, and thereby form a hydrogen bonding interaction between them. The composition ratio of the nonionic surfactant to the organic layered silicate is also important. An amount of the nonionic surfactant is preferably 5 parts by weight or more with respect to 100 parts by weight of the organic layered silicate, more preferably 20 parts by weight or more, and further preferably 50 parts by weight or more. An upper limit is not particularly set, but it is necessary to determine an upper limit in consideration of the balance among physical properties of the total aliphatic polyester resin composition.

In the next place, talc of the present invention will be described. A Type of talc is not particularly limited, but preferably has a smaller average particle size. It is preferably 15 μm or smaller, more preferably 5 μm or smaller, and further preferably 2 μm or smaller. Examples of talc with a particle size of 15 μm or smaller include LMP 100 and LMP 200 of Fuji Talc indl Co., Ltd. and Hi Filler 5000PJ produced by Matsumurasangyo Co., Ltd., and among them, the Hi Filler 5000PJ has a small particle size and has a high effect of increasing the crystallization rate of the aliphatic polyester resin composition of the present invention. In addition, such talc may be surface-treated in order to improve adhesiveness to a resin. Such talc is commercially available and is sold by Nippon Talc and Fuji Talc indl Co., Ltd.

An aliphatic polyester resin of the present invention is not particularly limited, but the aliphatic polyester resin having biodegradability is preferably used. Such an aliphatic polyester includes polylactic acid, polybutyrene succinate, polyethylen succinate, polybutyrene succinate adipate, polybutylene adipate terephthalate, polycaprolactone, a polybutyrene succinate carbonate, polyglycolic acid, polyvinyl alcohol, polyesteramide, polyester carbonate, polyketone and polysaccharides such as starch. In the present invention, these resins may be used singly or in combination with a plurality of copolymerized or mixed resin components.

In the present invention, polylactic acid is preferably used among the above described aliphatic polyester resins, because of having superior mechanical strength and transparency and being rich in general versatility. The weight average molecular weight of the polylactic acid is not particularly limited, but is preferably 50,000 or more, and further preferably 100,000 or more. In addition, when the polylactic acid is a copolymer of a D-enantiomer raw material with a L-enantiomer raw material, a contained ratio of one of the D-enantiomer raw material and the L-enantiomer raw material is 90 mol.% or more, more preferably 95 mol.% or more, and further preferably 98 mol.% or more. The polylactic acid may be any of the D enantiomer, the L enantiomer and the DL enantiomers. In addition, a blend at an arbitrary rate of the polylactic acid mainly containing the D enantiomer with the polylactic acid mainly containing the L enantiomer may be used.

The melting point of a polylactic acid is not particularly limited, but is preferably 120°C or higher, further preferably 150°C or higher, and particularly further preferably 160°C or higher. The melting point of the polylactic acid is usually enhances by increasing an optical purity of a lactic acid component. The polylactic acid with a melting point of 120°C or higher can

be obtained by controlling the purity of the L enantiomer to 90% or more or the purity of the D enantiomer to 90% or more; and the polylactic acid with a melting point of 150°C or higher can be obtained by controlling the purity of the L enantiomer to 95%'or more, or the purity of the D enantiomer to 95% or more.
Specific examples of these polylactic acids include NatureWorks (trade name) produced by NatureWorks LLC, Lacea (trade name) produced by Mitsui Chemical Inc., and U'z produced by Toyota Motor Corporation.

As for a ratio of each component in the aliphatic polyester resin composition of the present invention, it is preferable to control an organic layered silicate to 0.05 to 10 wt%, a nonionic surfactant to 0.05 to 20 wt%, and talc to 0.05 to 30wt% per 40 to 99.85 wt% of an aliphatic polyester resin; is more preferable to control the organic layered silicate to 0.1 to 10 wt%, the nonionic surfactant to 0.5 to 10 wt%, and the talc to 0.1 to 20 wt% per 60 to 99.3 wt% of the aliphatic polyester resin; and further preferable to control the organic layered silicate to 1.0 to 5.0 wt%, the nonionic surfactant to 2.0 to 5.0 wt%, and the talc to 3.0 to 8.0 wt% per 82.0 to 94.0 wt% of the aliphatic polyester resin. When less than the above described lower limit of the organic layered
silicate is contained, crystallinity of the obtained aliphatic polyester resin composition is not increased. When more than the above described upper limit of the organic layered silicate is contained, the obtained aliphatic polyester resin composition may be embrittled and have lowered impact strength. When the nonionic surfactant has a lower content than the above described lower limit, a crystallization rate of the aliphatic polyester resin composition is not improved so that the finally obtained resin composition has low heat resistance. On the other hand, when the nonionic surfactant has a content higher than the above described upper limit, the nonionic surfactant occasionally bleeds out from a formed article to defile an appearance. When the talc has a content lower than the above described lower limit, a crystallization rate of the aliphatic polyester resin composition is not improved so that the finally obtained resin composition has low heat resistance. On the other hand, when the talc has a content higher than the above described upper limit, the obtained aliphatic polyester resin composition may be embrittled and have lowered impact strength.

The composition of the present invention preferably contains an end-capping agent of the carboxyl terminal group of an aliphatic polyester. The end-capping agent inhibits a molecular weight of an obtained formed article from lowering, by blocking the carboxyl terminal group of the aliphatic polyester, and can improve its durability; and has also an effect of improving processing stability, through inhibiting hydrolysis and transesterification reaction when the resin composition is melt and processed. The end-capping agent of carboxyl terminal group in the present invention is not particularly limited, as long as having a capability of blocking a carboxylic terminal group in an aliphatic polyester of the present invention, particularly in polylactic acid. The end-capping agent of carboxyl terminal group in the present invention can block not only the terminal of the aliphatic polyester resin, but also the carboxyl group of acidic low molecular weight compounds such as lactic acid and formic acid, which are produced by thermal decomposition or hydrolysis of the aliphatic polyester or an organic filler material like a nonionic surfactant. In addition, the above described end-capping agent is further preferably a compound that can cap the hydroxyl terminal group which an acidic low molecular weight compound produces due to thermal decomposition.

Such an end-capping agent of carboxyl terminal group preferably employs at least one compound selected among an epoxy compound, an oxazoline compound, an oxazine compound and a carbodiimide compound, and among them, the epoxy compound and/or the carbodiimide compound are preferable.
An epoxy compound which can be preferably used in the end-capping agent of carboxyl terminal group in the present invention includes a glycidyl ether compound, a glycidyl ester compound, a glycidyl amine compound, a glycidyl imide compound and an cycloaliphatic epoxy compound. The usable epoxy compounds in addition to the above compounds include epoxy-modified fatty acid glycerides such as an epoxidized soybean oil, an epoxidized linseed oil, an epoxidized whale oil, a phenol novolak type epoxy resin and a cresol novolak type epoxy resin. Specific examples of an epoxy-based end-capping agent include ARFON made by Toagosei Co., Ltd., Blemmer CP50S made by Nippon Oil & Fats Co., Ltd. and Denacol EX-711 made by Nagase ChemteX Corporation.
Examples of the oxazoline-based end-capping agent which can be used as the end-capping agent of carboxyl terminal group in the present invention include Epocros RPS1005 made by Nippon Shokubai Co., Ltd., and 2,2'-m-phenylenebis (2-oxazoline) made by Takeda Pharmaceutical Company Limited.
The carbodiimide compound which can be used as the end-capping agent of carboxyl terminal group in the present invention is a compound having at least one carbodiimide group expressed by (-N=C=N-) in a molecule, and can be produced, for example, through a decarboxylation reaction by heating organic isocyanate in the presence of a suitable catalyst. Examples of the carbodiimide-based end-capping agent include Carbodilite LA1 and HMV-8CA made by Nisshinbo Industries, Inc.
The above described end-capping agent of carboxyl terminal group can be used singly or in combination with one or more arbitrarily selected compounds, but is also preferably used in combination with an epoxy compound and/or a carbodiimide compound. An appropriate amount of the end-capping agent of carboxyl terminal group in the present invention, which is added to an aliphatic polyester resin composition, depends on the application; but when the aliphatic polyester resin composition is defined as about 100 parts by weight, is preferably 0.01 to 10 parts by weight, more preferably 0.05 to 5 parts by weight, and further preferably 0.1 to 3 parts by weight. As for an adding method, the end-capping agent of carboxyl terminal group is preferably kneaded with the aliphatic polyester resin in a twin-screw extruder.

In addition, to the composition of the present invention, well-known additives used in the technological field related to the present invention can be added as needed, which are specifically, a plasticizer, a heat stabilizer, an oxidation inhibitor, a crystallization accelerator, a fire retardant, a mold release agent, and further an organic filler including the followings: vegetable fiber such as chaff, wood chips, bean-curd refuse, waste-paper-pulverized materials, cloth-pulverized materials, cotton fiber, flax fiber, bamboo fiber, wood fiber, kenaf fiber, hemp fiber, jute fiber, banana fiber and coconut fiber; animal fiber such as silk, wool, angora rabbit hair, cashmere and camel; and paper powder, wood flour, bamboo powder, cellulose powder, chaff powder, fruit shell powder, chitin powder, chitosan powder, protein and starch.

In addition, the aliphatic polyester resin composition of the present invention can improve the impact strength of an obtained formed article, through containing an impact strength improver used in the field related to the present invention. For instance, at least one agent can be used which is selected among the following various impact strength modifiers: specifically, polyethylene, polypropylene, ethylene-propylene copolymer, an ethylene-propylene-nonconjugated diene copolymer, an ethylene-butene-1 copolymer, various acrylic rubber, an ethylene-acrylic acid copolymer, an alkali metal salt thereof (so-called an ionomer), an ethylene-glycidyl(meth)acrylate copolymer, an ethylene-alkyl acrylate ester copolymer (such as an ethylene-ethyl acrylate copolymer and an ethylene-butyl acrylate copolymer), acid-modified ethylene-propylene copolymer, diene rubber (such as polybutadiene, polyisoprene and polychloroprene), a copolymer with diene and vinyl monomer (such as a styrene-butadiene random copolymer, a styrene-butadiene block copolymer, a styrene-butadiene-styrene block copolymer, a styrene-isoprene random copolymer, a styrene-isoprene block copolymer, a styrene-isoprene-styrene block copolymer, a copolymer made by graft-copolymerizing styrene with polybutadiene, a butadiene-acrylonitrile copolymer), polyisobutylene, a copolymer of isobutylene with butadiene or isoprene, natural rubber, thiokol rubber, polysulfide rubber, polyurethane rubber, polyether rubber, epichlorohydrin rubber, a polyester-based elastomer and a polyamide-based elastomer. A maleic acid modified elastomer or an amine modified elastomer can be preferably used. Examples of these elastomers include hydrogenated styrenic thermoplastic elastomers "Tuftec M1911", "Tuftec M1913" and "Tuftec M1943" of Asahi Kasei Chemicals Corporation, and "TDM19" which is a terminal amine modified elastomer made by the same Asahi Kasei Chemicals Corporation.

A method for preparing the aliphatic polyester resin composition of the present invention is not particularly limited, and the composition can be prepared by a well-known aliphatic polyester kneading technique, specifically a method of melting and kneading an aliphatic polyester, an organic layered silicate, a nonionic surfactant and talc. Among them, a kneading method with the use of a twin-screw extruder is preferably used, which can increase the dispersibility through efficiently applying shear stress during kneading. When kneading them, there is no particular limitation in the method and the order of adding the organic layered silicate, the nonionic surfactant and the talc, but the method of previously complexing the organic layered silicate with the nonionic surfactant is preferably used. There are two types of the methods for complexing the organic layered silicate with the nonionic surfactant, as is described below.

1. A method of heating a nonionic surfactant to a melting point or higher to melt it, and mixing it with an organic layered silicate to complex one with the other.
2. A method of dissolving the nonionic surfactant in a solvent, mixing it with a solution containing the organic layered silicate dispersed in a similar solvent, complexing them, and removing the solvent.

Either method may be used, but the method 1 is preferably used because of producing a lower amount of waste. A method for manufacturing a composite material with the method 1 will be specifically described.

The method consists of firstly heating the nonionic surfactant to a melting point or higher to convert it into a molten state, charging the organic layered silicate sufficiently dried by vacuum drying, and subjecting it to a kneading operation. Through the complexing method, the nonionic surfactant is taken between the layers of the organic layered silicate, and consequently can swell the organic layered silicate.

A formed article obtained by forming the aliphatic polyester resin composition of the present invention means the formed article obtained by any generally used forming method. Specifically, any method of injection molding, extrusion forming, blow molding, inflation forming, profile extrusion molding, injection blow molding, vacuum/pressure molding, fiber forming and extrusion foaming can be preferably used. When the resin composition is formed into a film shape or a sheet shape, it can be stretch-treated by simultaneous biaxial stretching and sequential biaxial stretching.

The injection molding will be now described in detail. As for the injection molding method, all injection molding methods such as gas injection molding and injection press molding, in addition to the general injection molding methods, can be used. In order to obtain a molded article having adequate heat resistance from the aliphatic polyester resin composition of the present invention, the following methods can be thought: (1) a method of filling a mold with the molten material of a resin composition, and crystallizing it in the mold as it is; and (2) a method of cooling the molded article, taking it out, and then holding (annealing) it at a crystallization temperature for a fixed period of time to crystallize it. In case of (1), a mold temperature is preferably set to be higher than a glass transition point (Tg) of the aliphatic polyester by 20°C

or higher and lower than a melting point by about 20°C. Specifically, when the aliphatic polyester resin is made from polylactic acid; the mold temperature is preferably 80 to 140°C, further preferably 100 to 130°C, and still further preferably 110 to 120°C. The aliphatic polyester resin composition of the present invention has a remarkably high crystallization rate, and accordingly can remarkably shorten a crystallization period of time in the mold, or equivalently mold cycle time, to improve manufacturing efficiency. In the case of (2), a crystallization temperature (an annealing temperature)of the aliphatic polyester resin made from polylactic acid may be such a temperature that is the melting point or lower and the glass transition temperature or higher, preferably about 60 to 120°C, further preferably 70 to 100°C, and still further preferably 80 to 90°C. When the aliphatic polyester resin composition of the present invention is used, it can shorten a post-annealing period of time and simultaneously remarkably inhibit the deformation of the molded article during the annealed period, because of having a high crystallization rate.

When a sheet obtained by sheet forming is formed into a tray or a cup, the sheet obtained by general extrusion can be formed with the use of a vacuum/pressure molding machine. It is also possible to prepare a foamed sheet by adding a chemical foaming agent, a physical foaming agent or both of them, and form it into the shape of the cup or the tray. As for the foaming agent, a product which is generally used in the field can be used. For instance, the foaming agent includes an inorganic compound such as hydrogen carbonate like sodium hydrogen carbonate, and ammonium carbonate; and an organic compound such as a polycarboxylic acid, an azo compound, a sulfone hydrazide compound, a nitroso compound, p-toluenesulfonyl semicarbazide, and an isocyanate compound. The polycarboxylic acid includes, for instance, citric acid, oxalic acid, fumaric acid and phthalic acid. The azo compound includes, for instance, azodicarbonamide (ADCA). The foaming agent also includes a combination of several compounds thereof. On the other hand, a physical foaming agent includes carbon dioxide, nitrogen gas, hydrocarbon, neon, helium, oxygen, water and fluorocarbon, but is not limited thereto. An aliphatic polyester resin composition with the concurrent use of an end-capping agent of carboxyl terminal group in the present invention can remarkably improve melt-extruding processability, when it is formed into a sheet, and particularly a foamed sheet. In order to impart a tray and a cup heat, resistance such as resistance to heat in a microwave oven, the following methods can be thought, similarly to the case of the above described injection molding: (1) a method of setting a mold temperature during vacuum compression air forming to about a crystallization temperature of the aliphatic polyester, and crystallizing it during forming; and (2) a method of setting the mold temperature to the Tg of the aliphatic polyester or lower, and holding (annealing) a formed article at the crystallization temperature for a fixed period of time to crystallize it. The mold temperature or the post-annealing temperature is approximately similar to the case of injection molding. An effect of using the aliphatic polyester resin composition of the present invention is similar to the case of the above described injection molding, and is the shortening of cycle time in case of (1), and the inhibition of deformation during post-annealing in case of (2).

A formed article of an aliphatic polyester resin of the present invention can be used in various fields such as an automobile field, an electric and electronic field, a packaging field, an agricultural field, a fishery field, a medical field and a general sundries field. It can be used in inner and exterior parts such as a bumper, a sheet fabric, a door handle and a floor mat, in the automobile field. It can be usefully used for a housing and inner parts of a personal computer, a housing and inner parts of a CRT display and a LCD, a housing and inner parts of a printer, a housing and inner parts of portable terminals such as a portable telephone, a mobile personal computer and a hand-held computer, a housing and inner parts of a drive for a recording medium (such as a CD, a DVD, a MD and a FDD), a housing and inner parts of a photocopier, a facsimile and the like, and housing and inner parts of a video tape recorder, a digital camera, a television, a refrigerator, an air conditioner and electronic and home electric equipment, in the home electric and electronic field; can be used for various packaging as a foaming buffer, a film for packing and a sheet, in the field of packing; can be used as a hygiene material such as a medical material and a sanitary product, in the medical field; and in addition, is useful in leisure goods, a card such as an integrated circuit card, a vessel/tableware such as a tray, a plastic can, a container, a tank and a basket, a bag, a chair and a table.

[Examples]

The present invention will be now described with reference to examples, but the present invention is not limited only to the examples described below. Measuring methods and forming methods used in the evaluation of Examples and Comparative Examples will be described below.

(1) DSC experiment 1

An exothermic enthalpy value (H1) associated with crystallization was measured with the use of a differential scanning calorimetry instrument (PYRIS Diamond DSC (trade name) made by PerkinElmer Corporation), after having prepared a sheet with the method described below, taken 5 to 10 mg of samples of from it and sandwiched it in an aluminum pan. The value was considered as an index of a crystallization rate. The measurement was performed under a nitrogen atmosphere, and temperatures were changed in the measurement in the order of the following steps:

step 1: increasing a temperature from 30°C to 200°C at a heating rate of 10°C/min;
step 2: holding a temperature constant at 200°C for 2 min; and
step 3: decreasing a temperature from 200°C to 30°C at a cooling rate of 30°C/min.

FIG. 1 shows the DSC profile charts in the step 3 of Example 1 and Comparative Example 2. The exothermic enthalpy value H1 was calculated from a peak area formed after a base line was drawn. The H1 of Example 1 is 29.3 (J/g) and H1 of Comparative Example 2 is 0 (J/g). The H1 and peak temperatures of Examples 1 to 7 and Comparative Examples 1 to 7 are each shown in Table 1.

(2) DSC experiment 2 (isothermal crystallization measurement)

A period of time (t) necessary for crystallization and an exothermic enthalpy value (H2) associated with crystallization were measured with the use of a heat differential analysis instrument (PYRIS Diamond DSC (trade name) made by PerkinElmer Corporation), after having prepared a sheet with the method described below, taken 5 to 10 mg of samples of from it and sandwiched it in an aluminum pan. In addition, by using the t and the H2, a crystallization parameter (CP) was calculated from the following expression 5, and the value was considered as an index of a crystallization rate.

$$CP = H2/(t \times 2) \qquad (5)$$

The above measurement was performed under a nitrogen atmosphere, and temperatures were changed in the measurement in the order of the following steps:

step 1: increasing a temperature from 30°C to 200°C at a heating rate of 10°C/min;
step 2: holding a temperature constant at 200°C for 2 min;
step 3: decreasing a temperature from 200°C to 100°C at a cooling rate of 100°C/min; and
step 4: holding a temperature constant at 100°C for 15 min.

FIG. 2 shows the DSC profile charts in the step 4 of Example 1 and Comparative Example 1. The H2 was calculated from a peak area formed after a base line was drawn. A crystallization period of time t means the period after having started the step 4 and before the DSC curve draws a peak. Exothermic enthalpy values, crystallization periods of time t and crystallization parameters CP in Examples and Comparative Examples are each shown in Table 1. Here, the higher H2 value means the higher crystallinity of the resin composition, and the shorter t means the higher crystallization rate. Specifically, the larger CP value means that a composition with the higher crystallinity can be obtained in the shorter time.

(3) Injection molding

A dumb-bell test piece (ASTMD638 Type 1 test piece) and a strip-shape test piece (127 mm × 13 mm × t1.6 mmt) were prepared with the use of an injection molding machine F-85 made by Klockner Corporation. These test pieces were used in measurements for a bending modulus of elasticity and heat deflection temperature (HDT), which will be described below. Basic injection molding conditions are as follow: cylinder temperature: 160 to 180°C, mold temperature: 120°C, injection pressure: 100 MPa, retention pressure: 60 MPa, screw rotating speed: 100 rpm, injection time: 2 seconds, retention time: 5 to 20 seconds, and cooling time: 20 to 100 seconds. Mold releasability was evaluated on the basis of the following indexes.

O: A molded article almost free from deformation could be taken out from the injection molding machine.
Δ: A molded article with a slight amount of deformation could be taken out.
×: A molded article was greatly deformed and physical properties could not be measured.

(4) Deflection temperature under load (HDT):

A heat distortion temperature was measured according to ASTMD-648 standard. The temperature was measured while a bending stress added to a test piece was controlled to 0.45 MPa.

(5) Bending modulus of elasticity:

A bending modulus of elasticity was measured according to ASTM standard D-790.

(6) Cup forming

Cups were prepared by the steps of: melting and kneading raw materials of the resin with the use of a co-rotating twin-screw extruder so as to acquire compositions shown in Examples 13 to 16 and Comparative Examples 11 and 12; pelletizing each into a pellet; extruding the pellet with the use of a single-screw extruder with a screw diameter of 30 mm from a T-die at a resin temperature of 180°C, after having charged a mixture of sodium bicarbonate and citric acid as a chemical foaming agent simultaneously with the pellet of the aliphatic polyester resin composition, so as to share the concentration of 1 wt% into the single-screw extruder; rolling the extruded article with a casting roll of 45°C into an amorphous foamed sheet with a thickness of about 2 mm; preheating the foamed sheet at 100°C for about 20 to 30 seconds; and forming the foamed sheet into a cup with a length of 180 mm, a width of 120 mm and a depth of 30 mm by using a vacuum/pressure forming machine. The formed cup was put in an oven of 80°C, was annealed for five minutes, and finally filled with a hot water of 90°C. In the above described steps, the following three items were evaluated. 1. sheet processing stability: O means that the sample was processed without causing any problem in the step of preparing the foamed sheet, and × means that the sample was not satisfactorily processed due to a thick spot and a draw down.

2. deformation in annealing: O means that the cup showed the deformation of less than 1% when annealed in the oven of 80°C for five minutes, Δ means that the cup showed the deformation of 1 to 5%, and × means that the cup showed the deformation of more than 5%. 3. heat resistance: O means that the cup showed the deformation of less than 1% in five minutes after about 80% of the capacity of the cup was filled with the hot water of 90°C, Δ means that the cup showed the deformation of 1 to 5%, and × means that the cup showed the deformation of more than 5%.

[Example 1]

A composite material was prepared by the steps of: employing the polyoxyethylene stearylether (Emalex 602 (trade name) made by Nihon Emulsion Co., Ltd., with the added mole numbers of polyoxyethylene of 2) as a nonionic surfactant; heating and melting it at 120°C; adding an organic layered silicate (MEE (trade name) made by Co-op Chemical Co., Ltd.); by mixing them in a mortar. A weight ratio of the mixture was controlled so as to be 133 g of the polyoxyethylene stearylether to 100 g of the organic layered silicate. Subsequently, an aliphatic polyester resin composition was prepared by the steps of: melting 88.7 g of polylactic acid (NatureWorks 4032D (trade name) made by NatureWorks LLC) at 200°C, with the use of Labo Prastomill (trade name) made by Toyo Seiki Seisaku-Sho, Ltd.; adding 2 g of talc (LPM100 made by Fuji Talc indl Co., Ltd.), and 9.3 g of the above described organic layered silicate/nonionic surfactant composite (consisting of 4 g of the organic layered silicate component and 5.3 g of a polyoxyethylene stearylether) to the melted polylactic acid; and kneading them. A kneading.period of time was controlled to five minutes and the rotational speed of a roller to 50 rpm. A sheet was prepared by the steps of: heating the composition at 200°C and press-forming it into a sheet with a thickness of 1 mm with a hot pressing machine; and rapidly cooling it to about 30°C with a low-temperature pressing machine having cooling water circulated therein.

[Example 2]

An aliphatic polyester resin composition was prepared by the steps of: melting 90.7 g of polylactic acid (NatureWorks 4032D (trade name) made by NatureWorks LLC) at 200°C; adding 2 g of talc (Hi Filler 5000PJ made by Matsumura Sangyo Co., Ltd.), 2.0 g of an organic layered silicate (MEE (trade name) made by Co-op Chemical Co., Ltd.), and 5.3 g of the polyoxyethylene stearylether (Emalex 602 (trade name) with the added mole numbers of polyoxyethylene of 2 made by Nihon Emulsion Co., Ltd.) as a nonionic surfactant, to the melted polylactic acid; and kneading them. Kneading conditions are similar to those in Example 1. In addition, a sheet was prepared from the aliphatic polyester resin composition with a similar method to that in Example 1.

[Example 3]

A sheet was prepared in the similar method to that in Example 2, except that the polyoxyethylene stearylether (Emalex 620 (trade name) with the added mole numbers of polyoxyethylene of 20 made by Nihon Emulsion Co., Ltd.) was used as a nonionic surfactant.

[Example 4]

A sheet was prepared in the similar method to that in Example 2, except that the polyoxyethylene stearylether (Emalex 610 (trade name) with the added mole numbers of polyoxyethylene of 10 made by Nihon Emulsion Co., Ltd.) was used as a nonionic surfactant.

[Example 5]

A sheet was prepared in the similar method to that in Example 3, except that MAE (trade name) produced by Co-op Chemical Co., Ltd. was used as an organic layered silicate.

[Example 6]

A sheet was prepared in a similar method to that in Example 2, except that a monooleinic polyoxyethylene sorbitan (Emalex ET 8020 (trade name) with the added mole numbers of polyoxyethylene of 20 made by Nihon Emulsion Co., Ltd.) was used as a nonionic surfactant.

[Example 7]

A sheet was prepared in a similar method to that in Example 2, except that isostearic polyoxyethylene glyceryl (Emalex GWIS-120 (trade name) with the added mole numbers of polyoxyethylene of 20 made by Nihon Emulsion Co., Ltd.) was used as a nonionic surfactant.

[Comparative Example 1]

Only polylactic acid (NatureWorks 4032D (trade name) made by NatureWorks LLC) was subjected to a kneading operation and a sheet forming operation under similar conditions to those in Example 1 and a sheet was prepared.

[Comparative Example 2]

A sheet was prepared with a similar operation to that in Example 1, except that talc and a nonionic surfactant were not added and that the amount of the organic layered silicate added was 6 g based on 94 g of the aliphatic polyester.

[Comparative Example 3]

A sheet was prepared with a similar operation to that in Example 1, except that a nonionic surfactant was not used.

[Comparative Example 4]

An aliphatic polyester resin composition was prepared by adding 2 g of talc to 98 g of polylactic acid and kneading it in a similar way to that in Example 2. Then, a sheet was prepared with a similar operation to that in Example 1.

[Comparative Example 5]

An aliphatic polyester resin composition was prepared with a similar operation to that in Example 2 except that ethylenebis-12-hydroxystearic acid amide (ITOWAX J-530 (trade name) made by Itoh Oil Chemicals Co., Ltd.) was added in place of a nonionic surfactant. Then, a sheet was prepared with a similar operation to that in Example 2.

[Comparative Example 6]

An aliphatic polyester resin composition was prepared with a similar operation to that in Example 2 except that citric tributyl acetate (ATBC (trade name) made by Taoka Chemical Corporation) which is polyvalent carboxylic acid in place of a nonionic surfactant. Then, a sheet was prepared with a similar operation to that in Example 2.

[Comparative Example 7]

An aliphatic polyester resin composition was prepared with a similar operation to that in Example 2 except that polycaprolactonediol (Placcel L220AL (trade name) made by Daicel Chemical Industries, Ltd.) in place of a nonionic

surfactant. Then, a sheet was prepared with a similar operation to that in Example 2.

[Table 1]

| No | aliphatic polyester | | organic layered silicate | | talc | | nonionic surfactant | |
|---|---|---|---|---|---|---|---|---|
| | added amount | types | added amount | types | added amount | types | added amount | types |
| Example 1 | 88.7 | polylactic acid | 4 | MEE | 2 | HiFiller 5000PJ | 5.3 | Emalex602 |
| Example 2 | 90.7 | polylactic acid | 2 | MEE | 2 | HiFiller 5000PJ | 5.3 | Emalex602 |
| Example 3 | 90.7 | polylactic acid | 2 | MEE | 2 | HiFiller 5000PJ | 5.3 | Emalex620 |
| Example 4 | 90.7 | polylactic acid | 2 | MEE | 2 | HiFiller 5000PJ | 5.3 | Emalex610 |
| Example 5 | 90.7 | polylactic acid | 2 | MAE | 2 | HiFiller 5000PJ | 5.3 | Emalex620 |
| Example 6 | 90.7 | polylactic acid | 2 | MEE | 2 | HiFiller 5000PJ | 5.3 | EmalexET8020 |
| Example 7 | 90.7 | polylactic acid | 2 | MEE | 2 | HiFiller 5000PJ | 5.3 | EmalexGWIS-120 |
| Comparative Example 1 | 100 | polylactic acid | | | | - | | |
| Comparative Example 2 | 94 | polylactic acid | 6 | MEE | | - | | |
| Comparative Example 3 | 94 | polylactic acid | 4 | MEE | 2 | HiFiller 5000PJ | | |
| Comparative Example 4 | 98 | polylactic acid | | | 2 | HiFiller 5000PJ | | |
| Comparative Example 5 | 88.7 | polylactic acid | 4 | MEE | 2 | HiFiller 5000PJ | 5.3 | J530 |
| Comparative Example 6 | 88.7 | polylactic acid | 4 | MEE | 2 | HiFiller 5000PJ | 5.3 | ATBC |
| Comparative Example 7 | 88.7 | polylactic acid | 4 | MEE | 2 | HiFiller 5000PJ | 5.3 | PCL |

(to be continued)

Table 1 (continued)

| No | DSC experiment 1 | | DSC experiment 2 | | |
|---|---|---|---|---|---|
| | H1 (J/g) | peak temperature (°C) | t (min) | H2 (J/g) | CP |
| Example 1 | 29.3 | 91.8 | 0.47 | 23 | 24 |
| Example 2 | 24.5 | 90.85 | 0.53 | 22.4 | 21 |
| Example 3 | 29.5 | 92.43 | 0.43 | 22.2 | 26 |
| Example 4 | 27.5 | 89.9 | 0.5 | 19.3 | 19 |
| Example 5 | 16.5 | 90.85 | 0.62 | 19.2 | 15 |
| Example 6 | 22 | 89.9 | 0.6 | 21 | 18 |
| Example 7 | 21 | 89.9 | 0.53 | 15.9 | 15 |
| Comparative Example 1 | 0 | - | 2.88 | 18.6 | 3 |
| Comparative Example 2 | 0 | - | - | - | |
| Comparative Example 3 | 3.8 | 94.2 | - | - | |
| Comparative Example 4 | 3.2 | 96.8 | 0.9 | 4.7 | 3 |
| Comparative Example 5 | 12 | 92.6 | 0.65 | 9.1 | 7 |
| Comparative Example 6 | 3.1 | 90.2 | - | - | |
| Comparative Example 7 | 3.1 | 90.7 | - | - | |

As shown in a DSC experiment 1 in Table 1, an aliphatic polyester resin composition prepared in Example 1 was crystallized even at a high cooling rate of 30/min, which means that the aliphatic polyester resin composition had a superior crystallization rate. On the other hand, the resin composition prepared in Comparative Example 1 or equivalently, polylactic acid added with nothing, is not crystallized at all. The resin composition prepared in Comparative Example 2 also is not almost crystallized. The resin composition prepared in Comparative Example 3 is slightly crystallized, but the degree is little. From these results, the effect according the present invention of mixing three components of an organic layered silicate, talc and a nonionic surfactant with an aliphatic polyester was clearly shown. As is clear from the results in Example 5-7, the addition of a general plasticizer ATBC, an amide-group-containing compound and PCL in place of the nonionic surfactant of the present invention, almost did not show a recognizable crystallization peak, which indicates that the nonionic surfactant of the present invention shows a remarkable crystallization promoting effect. A similar discussion is obtained from an isothermal crystallization experiment of a DSC experiment 2 as well. Specifically, only the aliphatic polyester resin composition of the present invention shows a high value for a crystallization parameter CP. This means that only the aliphatic polyester resin composition of the present invention provides a formed article with a high crystallinity in a very short time when crystallized.

[Example 8]

A pellet of an aliphatic polyester resin composition was prepared by the steps of: adjusting polylactic acid (NatureWorks 4032D (trade name) made by NatureWorks LLC), talc (Hi Filler 5000PJ made by Matsumura Sangyo Co., Ltd.), an organic layered silicate (MEE (trade name) made by Co-op Chemical Co., Ltd.), and the polyoxyethylene stearylether (Emalex 620 (trade name) with the added mole numbers of polyoxyethylene of 20 made by Nihon Emulsion Co., Ltd.) of a nonionic surfactant, into a composition ratio shown in Table 2 described below; charging them into a co-rotating twin-screw extruder with a screw diameter of 30 mm; and melting and kneading them. A kneading temperature was 200°C. The pellet was molded in the above described injection molding conditions. The cooling period of time was 20 seconds. The evaluation results are shown in Table 2.

[Example 9]

An aliphatic polyester resin composition was kneaded with the twin-screw extruder and injection-molded in similar conditions to those in Example 8, except that the cooling period of time was 35 seconds. The evaluation results are shown in Table 2.

[Example 10]

An aliphatic polyester resin composition was kneaded with the twin-screw extruder and injection-molded in similar conditions to those in Example 8, except that the cooling period of time was 50 seconds. The evaluation results are shown in Table 2.

[Example 11]

An aliphatic polyester resin composition was kneaded with the twin-screw extruder and injection-molded in similar conditions to those in Example 10, except that a nonionic surfactant in Example 8 was changed from Emalex 620 to Emalex 600 di-S. The evaluation results are shown in Table 2.

[Example 12]

A pellet of an aliphatic polyester resin composition was prepared by the steps of: adjusting polylactic acid (NatureWorks 4032D (trade name) made by NatureWorks LLC), talc (Hi Filler 5000PJ made by Matsumura Sangyo Co., Ltd.), an organic layered silicate (MEE (trade name) made by Co-op Chemical Co., Ltd.), the polyoxyethylene stearylether (Emalex 620 (trade name) with the added mole numbers of polyoxyethylene of 20 made by Nihon Emulsion Co., Ltd.) of a nonionic surfactant, and maleic-acid-modified hydrogenated styrenic thermoplastic elastomer (Tuftec M1943 (trade name) made by Asahi Kasei Chemicals Corporation) of an impact strength conditioner, into a composition ratio shown in Table 2; charging them into a co-rotating twin-screw extruder with a screw diameter of 30 mm; and melting and kneading them. A kneading temperature was 200°C. The pellet was molded in the above described injection molding conditions. But the cooling period of time was 50 seconds. The evaluation result is shown in Table 2.

[Comparative Example 8]

Only polylactic acid (NatureWorks 4032D (trade name) made by NatureWorks LLC) was injection-molded in similar conditions to those in Example 8. The evaluation results are shown in Table 2.

[Comparative Example 9]

Only polylactic acid (NatureWorks 4032D (trade name) made by NatureWorks LLC) and talc (Hi Filler 5000PJ made by Matsumura Sangyo Co., Ltd.) were kneaded with the twin-screw extruder into a composition ratio shown in Table 2, and the obtained pellet was injection-molded. Extrusion conditions and injection molding conditions were similar to those in Example 10. The evaluation result is shown in Table 2.

[Comparative Example 10]

A pellet was injection-molded in a similar condition to that in Comparative Example 9, except that the cooling period time in injection molding was 100 seconds. The evaluation result is shown in Table 2.
[Table 2]

| No | Example, experiment | aliphatic polyester | organic layered silicate | talc | nonionic surfactant | | impact strength conditioner | |
|---|---|---|---|---|---|---|---|---|
| Example 8 | injection | 90 | 2 | 5 | 3 | Emalex 620 | | |
| Example 9 | injection | 90 | 2 | 5 | 3 | Emalex 620 | | |
| Example 10 | injection | 90 | 2 | 5 | 3 | Emalex 620 | | |
| Example 11 | injection | 90 | 2 | 5 | 3 | Emalex 600 di-S | | |
| Example 12 | injection | 80 | 2 | 5 | 3 | Emalex 620 | 10 | Tuftec M1943 |
| Comparative Example 8 | injection | 100 | | | | | | |
| Comparative Example 9 | injection | 95 | | 5 | | | | |
| Comparative Example 10 | injection | 95 | | 5 | | | | |

(to be continued)

Table 2 (continued)

| No | cooling period/second | mold releasability | HDT/°C | bending modulus of elasticity/GPa |
|---|---|---|---|---|
| Example 8 | 20 | ○ | 127 | 5.5 |
| Example 9 | 35 | ○ | 140 | 6.2 |
| Example 10 | 50 | ○ | 145 | 6.8 |
| Example 11 | 50 | ○ | 147 | 6.7 |
| Example 12 | 50 | ○ | 130 | 4.5 |
| Comparative Example 8 | 50 | × | 58 | 3.5 |
| Comparative Example 9 | 50 | × | 70 | 3.8 |
| Comparative Example 10 | 100 | × | 80 | 4 |

From the results of Examples 8 to 11, it is known that the aliphatic polyester of the present invention gives the formed article a high heat resisting temperature (HDT) and a high modulus of elasticity, by crystallizing it in the very short cooling time of 20 seconds; and that it simultaneously gives superior mold releasability as well. Furthermore, from the results of Example 12, it is known that the addition of 10% elastomer as an impact strength conditioner hardly affects the heat resisting temperature. This means that a composition which balances heat resistance with impact strength can be obtained. On the other hand, it is known that compositions containing only talc of a general crystal nucleus agent (Comparative Examples 9 and 10) do not improve a HDT and a bending modulus of elasticity, even when they are subjected to crystallization treatment for a very long time of 100 seconds.

[Example 13]

A pellet of an aliphatic polyester resin composition was prepared by the steps of: adjusting polylactic acid (NatureWorks 4032D (trade name) made by NatureWorks LLC), talc (Hi Filler 5000PJ made by Matsumura Sangyo Co., Ltd.), an organic layered silicate (MEE (trade name) made by Co-op Chemical Co., Ltd.), the polyoxyethylene stearylether (Emalex 620 (trade name) with the added mole numbers of polyoxyethylene of 20 made by Nihon Emulsion Co., Ltd.)

of a nonionic surfactant, and a carbodiimide compound (Carbodilite LA1 (trade name) made by Nisshinbo Industries, Inc.) of an end-capping agent of carboxyl terminal group, into a composition ratio shown in Table 3; charging them into a co-rotating twin-screw extruder with a screw diameter of 30 mm; and melting and kneading them. A kneading temperature was 200°C. The pellet was formed into a cup shape in the above described cup forming conditions. The evaluation result is shown in Table 3.

[Example 14]

A pellet was formed into a cup in similar conditions to those in Example 13, except that a nonionic surfactant in Example 13 was changed from Emalex 620 to Emalex 600 di-S. The evaluation results are shown in Table 3.

[Example 15]

A pellet was formed into a cup in similar conditions to those in Example 13, except that a nonionic surfactant in Example 13 was changed from Emalex 620 to EmalexGWIS-120. The evaluation results are shown in Table 3.

[Example 16].

A pellet was formed into a cup with a similar method to that in Example 13, except that a carbodiimide compound was not used. The evaluation results are shown in Table 3.

[Comparative Example 11]

A pellet was formed into a cup with a similar method to that in Example 13, except that only polylactic acid was used as the resin composition. The evaluation results are shown in Table 3.

[Comparative Example 12]

A pellet was formed into a cup with a similar method to that in Example 13, except that the resin composition was prepared by adjusting polylactic acid and talc into a composition ratio shown in Table 3, and kneading them. The evaluation results are shown in Table 3.

[Table 3]

| No | Example, experiment | aliphatic polyester | organic layered silicate | | talc | nonionic surfactant | | carboxyl-group-reactive end-capping agent | |
|---|---|---|---|---|---|---|---|---|---|
| Example 13 | cup forming | 92.5 | MEE | 2 | 2 | 3 | Emalex 620 | Carbodilite LA1 | 0.5 |
| Example 14 | cup forming | 92.5 | MEE | 2 | 2 | 3 | Emalex 600di-S | Carbodilite LA1 | 0.5 |
| Example 15 | cup forming | 92.5 | MEE | 2 | 2 | 3 | Emalex GWIS120 | Carbodilite LA1 | 0.5 |
| Example 16 | cup forming | 92.5 | MEE | 2 | 2 | 3 | Emalex 620 | | |
| Comparative Example 11 | cup forming | 100 | | | | | | | |
| Comparative Example 12 | cup forming | 98 | | | 2 | | | | |

(to be continued)

Table 3 (continued)

| No | sheet processing stability | deformation in annealing | heat resistance |
|---|---|---|---|
| Example 13 | ○ | ○ | ○ |
| Example 14 | ○ | ○ | ○ |
| Example 15 | ○ | ○ | ○ |
| Example 16 | △ | ○ | ○ |
| Comparative Example 11 | × | × | × |
| Comparative Example 12 | × | △ | × |

As is shown in the results of Examples 13 to 16, an aliphatic polyester resin composition containing an end-capping agent of carboxyl terminal group gave a foamed sheet superior processability, no deformation in annealing, and high heat resistance, which means that it showed adequate results in all the evaluations. On the other hand, the composition containing only polylactic acid or only a conventional crystal nucleus agent showed bad results in all the evaluations. From these results, it is understood that the aliphatic polyester resin composition containing the end-capping agent of carboxyl terminal group in the present invention is a composition having an excellent balance between processability and heat resistance.

INDUSTRIAL APPLICABILITY

The aliphatic polyester resin composition of the present invention has an excellent crystallization rate, so that even a formed article produced from the composition in a short period of forming time can show superior heat resistance.

BRIEF DESCRIPTION OF THE DRAWINGS

[FIG. 1] DSC chart of the step 3 of Example 1 and Comparative Example 2 in a DSC experiment 1.
[FIG. 2] DSC chart of the step 3 of Example 1 and Comparative Example 1 in a DSC experiment 2.

## Claims

1. An aliphatic polyester resin composition comprising:

    - an aliphatic polyester,
    - an organic layered silicate obtained by treating a layered silicate with an organic onium salt,
    - talc, and
    - a nonionic surfactant.

2. The aliphatic polyester resin composition according to claim 1, comprising 0.05 to 10 wt% of the organic layered silicate, 0.05 to 30 wt% of the talc and 0.05 to 20 wt% of the nonionic surfactant with respect to 40.0 to 99.85 wt% of the aliphatic polyester.

3. The aliphatic polyester resin composition according to claim 1 or 2, wherein the organic onium salt has a polar group.

4. The aliphatic polyester resin composition according to claim 3, wherein the polar group is a hydroxyl group.

5. The aliphatic polyester resin composition according to claim 1, wherein the nonionic surfactant is at least one compound selected from the group consisting of a polyoxyethylene alkyl ether, a polyoxyethylene glycol fatty acid diester, a polyoxyethylene sorbitan fatty acid monoester and a polyoxyethylene glyceryl fatty acid ester.

6. The aliphatic polyester resin composition according to claim 1, wherein the nonionic surfactant is a polyoxyethylene alkyl ether or a polyoxyethylene glycol fatty acid diester.

7. The aliphatic polyester resin composition according to claim 1, wherein the nonionic surfactant is a polyoxyethylene alkyl ether.

8. The aliphatic polyester resin composition according to claim 1, wherein the aliphatic polyester is polylactic acid.

9. The aliphatic polyester resin composition according to claim 1, further comprising an end-capping agent of a carboxyl terminal group of the aliphatic polyester.

10. A formed article obtained by forming the aliphatic polyester resin composition according to any one of claims 1 to 9.

## Patentansprüche

1. Zusammensetzung eines aliphatischen Polyesterharzes, umfassend:

    - einen aliphatischen Polyester,
    - ein organisches Schichtsilikat, erhalten durch Behandeln eines Schichtsilikats mit einem organischen Oniumsalz,
    - Talk, und
    - ein nicht-ionisches oberflächenaktives Mittel.

2. Zusammensetzung eines aliphatischen Polyesterharzes nach Anspruch 1, umfassend 0,05 bis 10 Gew.-Teile des organischen Schichtsilikats, 0,05 bis 30 Gew.-% des Talks und 0,05 bis 20 Gew.-% des nicht-ionischen oberflächenaktiven Mittels, bezogen auf 40,0 bis 99,85 Gew.-% des aliphatischen Polyesters.

3. Zusammensetzung eines aliphatischen Polyesterharzes nach Anspruch 1 oder 2, worin das organische Oniumsalz eine polare Gruppe aufweist.

4. Zusammensetzung eines aliphatischen Polyesterharzes nach Anspruch 3, worin die polare Gruppe eine Hydroxygruppe ist.

5. Zusammensetzung eines aliphatischen Polyesterharzes nach Anspruch 1, worin das nicht-ionische oberflächenaktive Mittel mindestens eine Verbindung ist, ausgewählt aus der Gruppe, bestehend aus einem Polyoxyethylenalkylether, einem Polyoxyethylenglycolfettsäurediester, einem Polyoxyethylensorbitanfettsäuremonoester und einem

Polyoxyethylenglycerylfettsäureester.

6. Zusammensetzung eines aliphatischen Polyesterharzes nach Anspruch 1, worin das nicht-ionische oberflächenaktive Mittel ein Polyoxyethylenalkylether oder ein Polyoxyethylenglycolfettsäurediester ist.

7. Zusammensetzung eines aliphatischen Polyesterharzes nach Anspruch 1, worin das nicht-ionische oberflächenaktive Mittel ein Polyoxyethylenalkylether ist.

8. Zusammensetzung eines aliphatischen Polyesterharzes nach Anspruch 1, worin der aliphatische Polyester Polymilchsäure ist.

9. Zusammensetzung eines aliphatischen Polyesterharzes nach Anspruch 1, weiterhin umfassend ein Endverkappungsmittel einer terminalen Carboxylgruppe des aliphatischen Polyesters.

10. Formgegenstand, erhältlich durch Formen der Zusammensetzung eines aliphatischen Polyesterharzes nach einem der Ansprüche 1 bis 9.

**Revendications**

1. Composition de résine de polyester aliphatique comprenant :

   - un polyester aliphatique,
   - un silicate en couche organique obtenu par traitement d'un silicate en couche avec un sel d'onium organique,
   - de la stéatite et
   - un tensioactif non ionique.

2. Composition de résine de polyester aliphatique selon la revendication 1 comprenant de 0,05 à 10 % en masse du silicate en couche organique, de 0,05 à 30 % en masse de la stéatite et de 0,05 à 20 % en masse du tensioactif non ionique par rapport à de 40,0 à 99,85 % en masse du polyester aliphatique.

3. Composition de résine de polyester aliphatique selon la revendication 1 ou 2, dans laquelle le sel d'onium organique présente un groupe polaire.

4. Composition de résine de polyester aliphatique selon la revendication 3, dans laquelle le groupe polaire est un groupe hydroxyle.

5. Composition de résine de polyester aliphatique selon la revendication 1, dans laquelle le tensioactif non ionique est au moins un composé choisi dans le groupe constitué d'un alkyléther de polyoxyéthylène, d'un diester d'acide gras de polyoxyéthylène glycol, d'un monoester d'acide gras de polyoxyéthylène sorbitane et d'un ester d'acide gras de polyoxyéthylène glycéryle.

6. Composition de résine de polyester aliphatique selon la revendication 1, dans laquelle le tensioactif non ionique est un alkyléther de polyoxyéthylène ou un diester d'acide gras de polyoxyéthylène glycol.

7. Composition de résine de polyester aliphatique selon la revendication 1, dans laquelle le tensioactif non ionique est un alkyléther de polyoxyéthylène.

8. Composition de résine de polyester aliphatique selon la revendication 1, dans laquelle le polyester aliphatique est le poly(acide lactique).

9. Composition de résine de polyester aliphatique selon la revendication 1 comprenant de plus un agent de coiffage de terminaison d'un groupe terminal carboxyle du polyester aliphatique.

10. Article façonné obtenu en façonnant la composition de résine de polyester aliphatique selon l'une quelconque des revendications 1 à 9.

[Fig. 1]

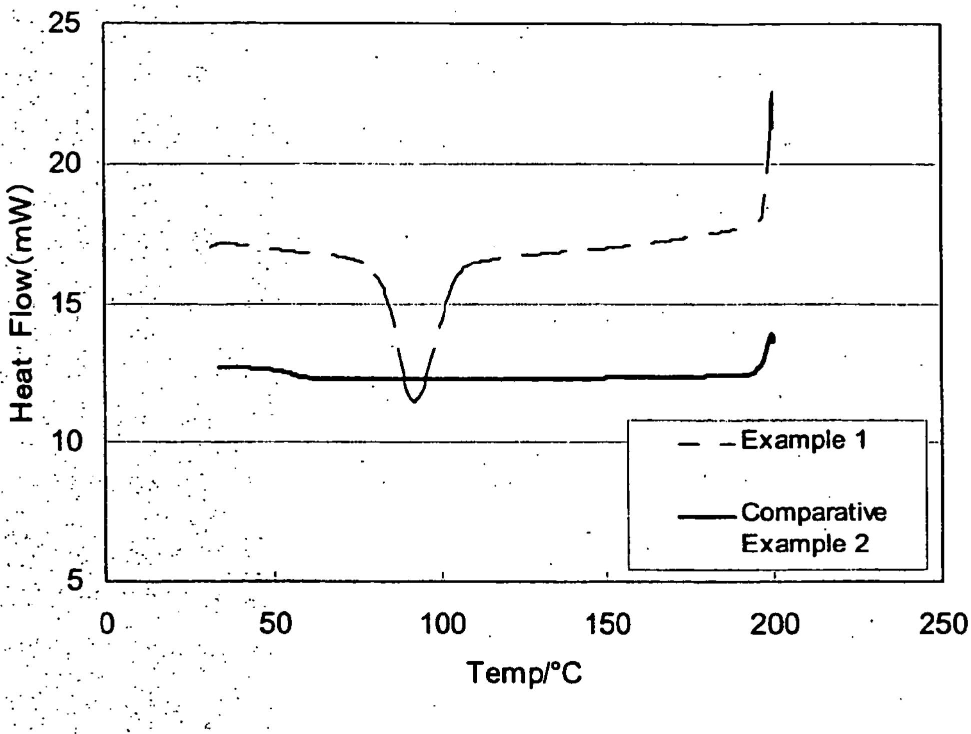
25
20
15
10
5
Heat Flow(mW)
0
50
100
150
200
250
Temp/°C
Example 1
Comparative Example 2

[Fig. 2]

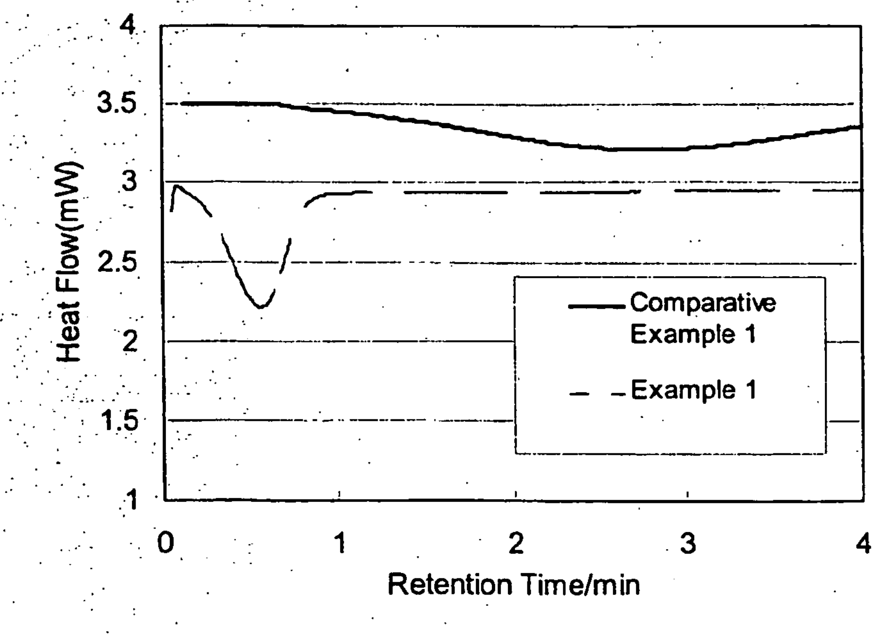
4
3.5
3
2.5
2
1.5
1
Heat Flow(mW)
0
1
2
3
4
Retention Time/min
Comparative Example 1
Example 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6299054 A
- JP 8027363 A
- JP 2003073538 A
- JP 2003128900 A
- WO 04099315 A
- JP 2004051666 A